Europäisches Patentamt

European Patent Office

Office européen des brevets

(19)

(11) Publication number: **0 102 844**
**A2**

# (12) EUROPEAN PATENT APPLICATION

(21) Application number: 83305137.8

(22) Date of filing: 05.09.83

(51) Int. Cl.³: **B 60 C 1/00**
**B 60 C 5/14, B 60 C 21/08**

(30) Priority: 07.09.82 US 415468

(43) Date of publication of application:
14.03.84 Bulletin 84/11

(84) Designated Contracting States:
BE DE FR GB IT

(71) Applicant: POLYSAR LIMITED

Sarnia Ontario N7T 7M2(CA)

(72) Inventor: Mohammed, Sheikh Azizual Hassan
1056 Guthrie Drive
Sarnia Ontario(CA)

(72) Inventor: Timar, John
1122 Wilson Drive
Sarnia Ontario(CA)

(72) Inventor: Walker, John
705-845 Trillium Park
Sarnia Ontario(CA)

(74) Representative: Perry, Robert Edward et al,
GILL JENNINGS & EVERY 53-64 Chancery Lane
London WC2A 1HN(GB)

(54) Inner liner for use in a tubeless pneumatic tire.

(57) For use in a tubeless pneumatic tire having puncture-sealing characteristics, an inner liner comprises a puncture-sealing laminate having two outer halobutyl polymer-containing layers and an inner butyl polymer-containing layer, the laminate having been irradiated such that the inner layer has a Mooney (ML 1+4 at 100°C) of less than 12.

EP 0 102 844 A2

Croydon Printing Company Ltd.

0102844

# INNER LINER FOR USE IN A TUBELESS PNEUMATIC TIRE

This invention is directed to a tubeless pneumatic tire having puncture-sealing characteristics, the tire comprising as the inner liner an irradiated laminate,the two outer layers of which are based on halobutyl and the central layer of which is based on butyl.

One objective of both the automotive industry and the tire industry has been to develop a self-sealing tire, by which is meant a tire having puncture-sealing properties. One approach to providing such a tire has been to provide a layer or coating of a material which will flow into and seal a hole resulting from a puncture and generally such a layer or coating is applied to the inside of the tire after it has been cured. US-A-3,981,342 teaches a puncture-sealing tire having within the tire a puncture-sealing layer comprising a low molecular weight elastomer mixed with a high molecular weight elastomer,the mixture being partially crosslinked. DE-A-28 40 035 discloses the use,as the sealing layer,of cured alkyl acrylate-glycidyl monomer polymers.        US-A-4,090,546 describes the sealing layer as being a mixture of a non-polar polymer, polybutene and white carbon. JP-A-80 15396 teaches coating the interior of the tire with a vulcanizable sealing composition and coating over this a vulcanizable elastomer composition. US-A-4,216,812 describes a puncture sealant containing a lubricant and an amide wax applied as a layer to the interior of a tire.        US-A-4,304,281 teaches a run-flat tire having a coating,on its interior surface,of a lubricating material. The use of a laminated puncture sealing strip in pneumatic tires is described in US-A-3,048,509, the laminated strip having layers of an unvulcanized styrene-butadiene polymer,and softening and tackifying agents interposed between layers of vulcanized styrene-butadiene polymer. The interior surface of a tire may be coated with a closed cell structure as taught in US-A-4,210,187, the closed cell structure being treated with oil. US-A-4,089,360 teaches a pneumatic tire having a laminate as an inner liner,wherein the laminate has at least two groups of layers, each layer containing polymer and vulcanizing agent, one such group of layers containing p-dichlorobenzene or thioetherpolythiol and the other such group of layers containing a specified amine or phenol compound, the laminate being exposed to radiation and assembled in the tire. US-A-4,140,167 teaches a vulcanizable pneumatic tire having an inner liner which has been irradiated and which is a laminate of at least two layers of rubber compounds, the outer layer having a higher degree of crosslinking than the inner layer which is a puncture sealing material and is a blend of an irradiation degraded polymeric material and an irradiation crosslinked polymeric material, the irradiation degraded polymeric material being selected from polyisobutylene, copolymers containing isobutylene and polyethylene oxide, and the irradiation crosslinked polymeric material being selected from natural rubber, copolymers of styrene and butadiene and halogenated butyl rubber. US-A-4,228,839 discloses a method for making a pneumatic tire which contains a puncture sealant layer within the crown area of the tire,by assembling the puncture sealant layer in the tire, vulcanizing the tire and subsequently irradiating the tire, the puncture sealant layer being a mixture containing one polymeric material that degrades on irradiation and a second polymeric material that crosslinks on irradiation.

The present invention describes a tubeless pneumatic tire having puncture-sealing characteristics, the tire having as the inner liner a puncture-sealing laminate, wherein the two outer layers of the laminate comprise halobutyl polymer and the central layer of the laminate comprises butyl polymer, the whole laminate having been irradiated. The present invention also describes a puncture sealing inner liner for use in a tubeless pneumatic tire which comprises a laminate, the two outer layers of which contain halobutyl polymer and the inner layer of which contains butyl polymer, the whole inner liner having been irradiated.

In accordance with the invention, there is provided a tubeless pneumatic tire having puncture-sealing characteristics which tire comprises an annular road-engaging tread, two annular beads, two sidewalls, each sidewall connecting a side of said tread to an annular bead, reinforcing body ply or plies extending from one bead to the other under the sidewall and tread portions, and an inner liner extending inside said reinforcing body ply or plies from one bead toe to the other bead toe, characterized in that said inner liner comprises a puncture-sealing laminate having a first outer layer and a second outer layer overlapping an inner layer, said first and second outer layers being joined together at the area of overlap, said second outer layer being innermost of the laminate, wherein said first and second outer layers comprise halobutyl polymer and said inner layer comprises butyl polymer, said laminate having been irradiated such that said inner layer has a Mooney (ML 1+4 at 100°C) of less than about 12.

Further in accordance with the invention, there is provided an inner liner for use in a tubeless pneumatic tire comprising a puncture-sealing laminate having a first outer layer and a second outer layer overlapping an inner layer, said first and second outer layers being joined together at the area of overlap, wherein said first and second outer layers comprise halobutyl polymer and said inner layer comprises butyl polymer, said laminate having been irradiated such that said inner layer has a Mooney (ML 1+4 at 100°C) of less than about 12.

Still further in accordance with the invention, there is provided a process for producing a tubeless pneumatic tire having puncture-sealing characteristics, which process comprises the steps of assembling a tire having a road-engaging tread, two annular beads, two sidewalls, reinforcing body ply or plies and an inner liner, and shaping and vulcanizing said tire, characterized in that said inner liner is a puncture-sealing laminate produced by providing a first outer layer, an inner layer and a second outer layer, wherein said first and second outer layers overlap said inner layer and are joined together at the area of overlap, said first and second outer layers comprising halobutyl polymer, said inner layer comprising butyl polymer, and irradiating said laminate such that said inner layer has a Mooney (ML 1+4 at 100°C) of less than about 12.

Still further in accordance with the invention, there is provided a process for producing an inner liner for use in a tubeless pneumatic tire, which process comprises providing a puncture-sealing laminate by the steps of providing a first outer layer, applying an inner layer and applying a second outer layer, wherein said first and second outer layers overlap said inner layer and are joined together at the area of overlap, said first and second outer layers comprising halobutyl polymer and said inner layer comprising butyl polymer, and irradiating the

0102844

5

laminate such that the inner layer has a Mooney (ML 1+4 at 100°C) of less than about 12.

The invention will be more readily understood by reference to the drawings wherein:

FIGURE 1 is a cross-sectional view of a tire having a puncture-sealing inner liner according to the invention;

FIGURE 2 is a cross-sectional view of a puncture-sealing inner liner of the invention;

FIGURE 3 is a cross-sectional view of an alternative embodiment of a puncture-sealing inner liner of the invention; and

FIGURE 4 is a cross-sectional view of one embodiment of forming a puncture-sealing inner liner for use in a pneumatic tire.

The essence of this invention lies in providing an inner liner for a tire, wherein the inner liner is a puncture-sealing laminate, the inner layer of which is a polymer degraded by irradiation, such that both when the inner liner is penetrated by a puncturing means and when the puncturing means is removed, sealing of the inner liner will occur at the point of puncture, such sealing being by the degraded polymer of the inner layer of the laminate.

Accordingly, it is necessary to provide an inner liner of not too great thickness as to be impractical, but thick enough to allow its manufacture, as by the combining together of three layers. It is also necessary to provide in the laminate forming the inner liner sufficient green strength for it to be self-supporting, especially during the stages of tire assembly and forming. It is also necessary to provide an inner layer of the laminate that will flow into and seal any hole that would otherwise be formed on penetration by or removal of a puncturing means. By the use of a puncture-sealing laminate, there is eliminated any problem prevalent in the prior art when the puncturing means enters the sidewall portion of the tire, because the inner liner is present from bead toe to bead toe, whereas in much of the prior art the interior coatings providing the sealing characteristics are only present at the tread area or the immediately adjacent sidewall area of the tire.

The inner layer of the laminate forming the inner liner comprises butyl polymer. Butyl polymer is well known in the art and is a polymer of a $C_4$-$C_6$ isoolefin, preferably isobutylene, and a $C_4$-$C_6$ conjugated diolefin, preferably isoprene. A preferred butyl polymer contains from about 97 to about 99.5 weight per cent of isobutylene and from about 0.5 to about 3 weight per cent of isoprene. The butyl polymer is a solid polymer having a molecular weight, expressed as the Mooney (ML 1+8 at 125°C), of from about 25 to about 65, preferably from about 40 to about 60.

The first outer layer and the second outer layer of the laminate comprise halobutyl polymer. Halobutyl polymer is well known in the art and is one of chlorobutyl or bromobutyl polymer and is produced by the chlorination or bromination of butyl polymer. A preferred chlorobutyl polymer contains from about 97 to about 99 weight per cent of isobutylene and from about 1 to about 3 weight per cent of isoprene, based on the hydrocarbon content of the polymer, and from about 0.5 to about 2.5 weight per cent of chlorine, based on the chlorobutyl polymer. A preferred bromobutyl polymer contains from about 97 to about 99 weight per cent of isobutylene and from about 1 to about 3 weight per cent of isoprene, based on the hydrocarbon content of the polymer, and from about 1 to about 4 weight per cent of bromine, based on the bromobutyl polymer. The chlorobutyl and bromobutyl polymers are solid polymers having a molecular weight, expressed as the Mooney (ML 1+8 at 125°C), of from about 25 to about 65.

The layers of the laminate forming the inner liner are compounded with ingredients well known in the art. The inner layer comprising butyl polymer preferably contains, per 100 parts by weight of butyl polymer, from about 50 to about 120 parts by weight of one or more types of carbon black, from about 30 to about 100 parts by weight as plasticizers of one or more fluid polyisobutylenes or copolymers containing polyisobutylene, from about 15 to about 35 parts by weight of one or more hydrocarbon oil, especially paraffinic hydrocarbon oil, from about 2 to about 10 parts by weight of one or more hydrocarbon tackifiers or hydrogenated wood rosin tackifiers, and from about 0.5 to about 3 parts by weight of other processing aids such as stearic acid.

Preferably, the compounded butyl polymer will have a Mooney (ML 1+4 at 100°C) of from about 15 to about 30, for ease of mixing and calendering into sheets for use in the laminate. The compounding procedure is well known in the art and may utilize mill mixing or internal mixing under conditions well known for compounding of butyl polymer compounds. The first outer layer and the second outer layer are preferably essentially identical in composition and preferably contain, per 100 parts by weight of halobutyl polymer, from about 20 to about 80 parts by weight of one or more types of carbon black or from about 15 to about 40 parts by weight of carbon black and from about 30 to about 90 parts by weight of calcium carbonate or soft clay, from about 5 to about 30 parts by weight of one or more hydrocarbon oil, especially paraffinic hydrocarbon oil, from about 2 to about 15 parts by weight of one or more tackifiers such as hydrocarbon tackifiers or hydrogenated.wood rosin tackifiers,and a vulcanization system. Suitable vulcanization systems include, per 100 parts by weight of halobutyl polymer, from about 2 to about 15 parts by weight of zinc oxide, from about 0.5 to about 2 parts by weight of one or more sulphur-containing accelerators such as benzothiazyl disulphide, mercaptoimidazoline or tetraethylthiuram disulphide,and from 0 to about 1 part by weight of sulphur. .The compounding procedure is well known in the art and may utilize mill mixing or internal mixing, with the components of the vulcanization system being added in a separate step and at a lower temperature, such as from about 40° to about 70°C. Preferably, the compounded halobutyl polymer will have a Mooney (ML 1+4 at 100°C) of from about 35 to about 60.

The compounded butyl polymer and the compounded halobutyl polymer are separately formed into sheets or plies, such as by calendering. The laminate is prepared by plying together a first outer sheet of compounded halobutyl polymer, an inner sheet of compounded butyl polymer and a second outer sheet of compounded halobutyl polymer. In order to keep the weight of the laminate forming the inner liner within a reasonable and practical range, we prefer to use sheets or plies of compounded halobutyl polymer having a thickness of from about 0.2 to about 1 mm, preferably from about 0.25 to about 0.5 mm, and to use sheets or plies of compounded butyl polymer having a thickness of from about 0.7 to about 4 mm, preferably from about 1 to about 3 mm. In general, inner liners for use in passenger tires will be thinner than inner liners for use in truck and other commercial vehicle or off the road tires. Procedures for forming such sheets or plies and for plying together such sheets are well known in the industry.

The laminate is then irradiated either before assembly into the tire, or after assembly into the tire. We prefer to irradiate the laminate before assembly into the tire, because the irradiation of the laminate causes a partial cross-linking of the two outer layers of compounded halobutyl polymer, thereby providing the laminate with improved green strength, for ease of handling, while causing degradation of the compounded butyl polymer of the inner layer. The laminate is assembled into the tire by well known procedures common to the industry for the assembly of tubeless tires, and is used in place of the conventional inner liner. The presence of halobutyl polymer in the outer layer of the inner liner provides a high level of adhesion to the carcass, which is not achievable with butyl polymer, and accordingly use of the inner liner of the present invention provides a quality tire with excellent air-retention properties. For example, on a tire building drum, a laminate is laid down, the beads are applied, followed by the reinforcing ply or plies, the tread portion and the sidewalls. The assembled tire is placed in a mold where it is heated to vulcanize the whole assembly. The tire may be any of the known types, that is radial, bias or bias-belted.

Irradiation of the laminate may be accomplished with any of the known irradiation equipment, and preferably equipment providing controlled doses of high speed electrons, as produced in a high voltage accelerator. We have found that, for electron beam irradiation, a nominal dosage of from about 0.75 to about 5 Megarads is suitable, preferably from about 1 to about 4 Megarads. Such nominal radiation dosage is adequate to cause the desired extent of crosslinking of the compounded halobutyl polymer layers and the desired extent of degradation of the compounded butyl polymer layer. The compounded butyl polymer of the second inner layer is degraded such that it has a Mooney (ML 1+4 at 100°C) of less than about 12, preferably equal to or less than 10, in order to provide the required sealing characteristics.

During the vulcanization of the assembled tire, the compounded halobutyl polymer layers undergo further vulcanization to provide the necessary strength properties in the inner liner. The presence of the halobutyl polymer in the outer layers and of the butyl polymer in the inner layer of the inner liner provides the required air impermeable character to the inner liner.

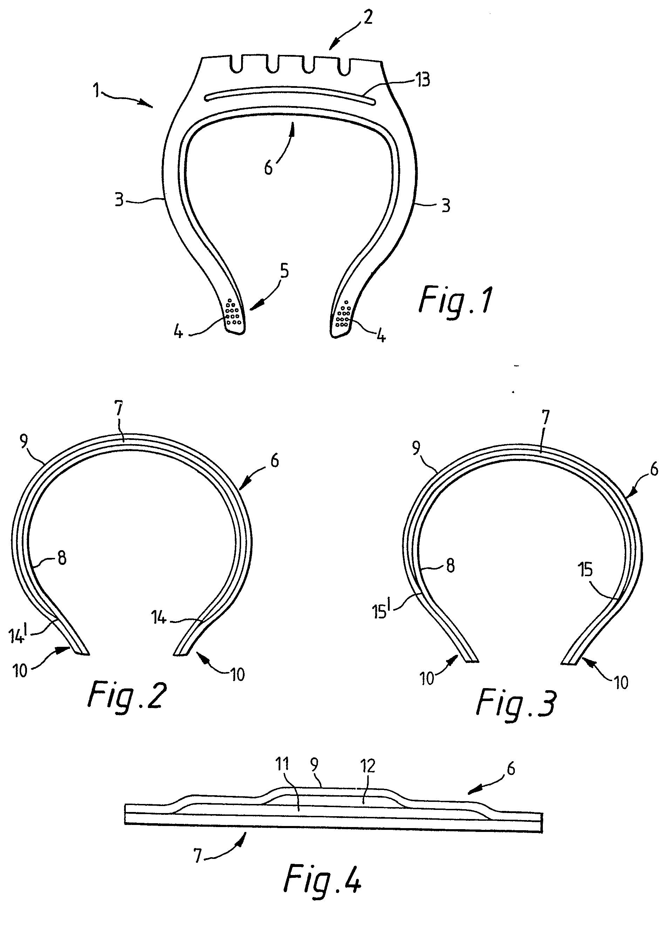

Referring now to the Figures, Figure 1 shows a cross-sectional view of a tire having a puncture-sealing inner liner, wherein the tire is generally shown at 1, the tread portion at 2, a reinforcing belt at 13 (as would be used in a bias-belted or radial tire), a sidewall at 3, an annular bead at 4, and the inner liner generally at 6. A reinforcing body ply (not shown) extends from one bead to the other. The inner liner 6 is attached to the tire at 5, at about the bead toe. Figures 2 and 3 show two embodiments of the inner liner 6, having a first outer layer 9, an inner layer 8 and a second outer layer 7. The inner liner would be attached to the tire at 10. The inner layer, which is the sealing layer, may extend through the laminate from point 14' to the point 14 (as in Figure 2) which essentially coincides with a point closely adjacent to the bead toe of the tire, or may extend through the laminate from point 15' to the point 15 (as in Figure 3) which essentially coincides with a wide, or even the widest, portion of the tire. In Figure 4, the outer first layer is shown at 9 and the outer second layer is shown at 7 of the inner liner 6 before it is transformed to the toroidal shape. The inner layer is shown as having two portions, a first portion being at 11 and a second portion being at 12. As is well known in the art, transforming the flat inner liner to the toroidal shape causes some thinning down of the thickness, particularly at the central portion; hence, the planar form of the inner liner shown in Figure 4 is a preferred embodiment wherein the inclusion of the second portion 12 of the inner layer facilitates provision of an inner liner within the tire having an essentially even thickness of the inner layer.

The following examples illustrate the present invention and do not limit the scope thereof. All parts are parts by weight unless otherwise specified.

EXAMPLE 1

Laboratory equipment was set up to screen potential inner liners. An automobile tire was connected at the valve, by small diameter tubing to a source of air, a pressure gauge and to a test sample cell. The volume of air in the tire was large compared to the volume of air in the remaining items of the laboratory equipment. Accordingly, any leakage of the test inner liner located in the test sample cell would reflect what would happen to the air pressure in a tire.

Laminate inner liner samples were prepared for tests. Three bromobutyl polymer compounds were prepared according to the recipes shown in Table 1, in which bromobutyl polymer 1 contained 2.1 weight per cent of bromine and had a Mooney (ML 1+8 at $125^{\circ}C$) of 45 and bromobutyl polymer 2 contained 2 weight per cent of bromine and had a Mooney (ML 1+8 at $125^{\circ}C$) of 30. These compounds were prepared by mixing in an internal mixer with the starting temperature at $70^{\circ}C$ and final dump temperature of $125^{\circ}C$, the curative system being added on a mill at $50^{\circ}C$. Three butyl polymer compounds were prepared according to the recipes shown in Table 2, in which the butyl polymer contained about 2.65 weight per cent of isoprene. These compounds were prepared by mixing in an internal mixer with a starting temperature of 50°C and completion of the mixing in 4 minutes.

The bromobutyl polymer compounds and the butyl polymer compounds were calendered into sheets using a three roll calender with the rolls at temperatures of 110 to 115°C. The bromobutyl polymer compound was calendered into sheets of 0.3 mm thickness. The butyl polymer compound was calendered into sheets of both 1 mm and 2 mm thickness.

Laminate inner liners were prepared by plying a butyl polymer compound sheet onto a bromobutyl polymer compound sheet and a bromobutyl polymer compound sheet on top to form a laminate of:

bromobutyl-butyl-bromobutyl.

Such laminates were prepared in duplicate, the second set being prepared with silicone paper sheets between each layer to allow each layer to be recovered after irradiation and have its properties determined.

The laminate inner liners were irradiated using a 3 MV electron beam accelerator, samples of each laminate being irradiated to nominal dosages varying from 0.75 to 4 Mrad. The Mooney viscosity results are provided in Table 3 for the irradiated laminates having silicone paper separating each layer, with the results for the bromobutyl polymer compound showing the data for both the top and the bottom layers with respect to the direction of incidence of the radiation. The results show that the bromobutyl polymer compound layers generally increase in Mooney and the green strength of the compound increases on irradiation, whereas the butyl polymer compound layers decrease in Mooney on irradiation showing that degradation occurs of the polymer in this layer.

The laminate inner liners which did not contain silicone paper between each layer were, after irradiation, vulcanized by heating at 150°C for 30 minutes. The vulcanized laminates were then tested in the laboratory equipment. The test procedure involved placing a sample of the vulcanized laminate in the test sample cell, pressuring the system to 30 psi (2 kg/cm$^2$) with air, checking for leaks and re-assembling if necessary until leak-free, puncturing the laminate with a nail having a diameter of 4.8 mm, leaving the nail in for 1 minute, withdrawing the nail and monitoring the change in pressure every minute for 5 minutes and finally after a test time of 10 minutes. The procedure was repeated by puncturing with the nail through the same puncture and monitoring the pressure change and then repeated again. A laminate was judged to be a failure if the pressure in the cell dropped 15% or more at the end of the first minute and continued to drop over the total test time of 10 minutes, or if the pressure in the cell dropped 15% or more over the total test time of 10 minutes for any of the three repeat tests. The results of the puncture testing are shown in Table 4. Comparing the data in Table 4 with the Mooney data in Table 3, it is readily apparent that the screening test does appear to provide a gross differentiation between the laminates, and shows that laminates which pass the test contain inner layers of compounded butyl polymer which, on irradiation, have been degraded such that the Mooney (ML 1+4 at 100°C) is less than about 12 and preferably equal to or less than about 10, irrespective of whether the thickness of the layer is 1 or 2 mm.

14

TABLE 1

| Sample | 1 | 2 | 3 |
|---|---|---|---|
| Bromobutyl polymer 1 | 100 | 100 | - |
| Bromobutyl polymer 2 | - | - | 100 |
| Carbon black N-660 type | - | 60 | 60 |
| Carbon black N-326 type | 25 | - | - |
| Stearic acid | 1 | 1 | 1 |
| Calcium carbonate | 75 | - | - |
| Tackifier (pentaerythritol ester of rosin) | 7 | - | - |
| Extender oil (paraffinic) | 12 | - | - |
| Extender oil (paraffinic) | - | 15 | 15 |
| Tackifier (Escorez 1102) | - | 4 | 4 |
| | | | |
| Curative System | | | |
| Zinc oxide | 3 | 3 | 3 |
| 2,2'-Dibenzothiazyl disulphide | 1 | 1.3 | 1.3 |
| Sulphur | 0.5 | 0.5 | 0.5 |
| | | | |
| Compound Viscosity | | | |
| ML 1+4 at 100°C | 44 | 50 | 42 |

15

## TABLE 2

| Sample | 4 | 5 | 6 |
|---|---|---|---|
| Butyl polymer | 70 | 60 | 55 |
| Polyisobutylene | 30 | 40 | 45 |
| Carbon black N-660 type | 60 | 60 | 60 |
| Extender oil (paraffinic) | 15 | 15 | 15 |
| Stearic acid | 1 | 1 | 1 |
| Tackifier (Escorez 1102) | 4 | 4 | 4 |
| | | | |
| Compound Viscosity ML 1+4 at 100$^{\circ}$C | 26 | 22 | 18 |

## TABLE 3

### Mooney Viscosity After Irradiation

| Sample | | Nominal Radiation Dose (Mrad) | | | | | |
|---|---|---|---|---|---|---|---|
| | | 0.75 | 1.5 | 1.9 | 2.3 | 2.7 | 4 |
| * 1 (0.3 mm thick) top | | 49 | ·50 | 47 | 50 | 49 | 50.5 |
| bottom | | 50 | 50 | 48.5 | 46 | 43 | 45 |
| * 2 (0.3 mm thick) top | | 51 | 47.5 | 60 | 62 | 58 | 60 |
| bottom | | 52 | 59.5 | 57.5 | 55.5 | 53 | 53 |
| * 3 (0.3 mm thick) top | | 42.5 | ·43 | 44 | 45 | 45.5 | 55 |
| bottom | | 42.5 | 45 | 45 | 46 | 45.5 | 46 |
| 4 (2 mm thick) | | 19 | 14 | 12 | 11 | 10.5 | 7 |
| (1 mm thick) | | – | 16 | 14.5 | 13.5 | 12 | 9 |
| 5 (2 mm thick) | | 15 | 11 | 10 | 8.5 | 8 | 7 |
| (1 mm thick) | | 10 | 14 | 8 | 11 | 11 | – |
| 6 (2 mm thick) | | 13 | 11 | 9 | 9 | 8 | 6 |
| (1 mm thick) | | 14 | 12 | – | 10.5 | – | 8 |

Mooney viscosity is ML 1+4 at 100°C

* – For laminates containing 2 mm thick layer of Sample 4.

## TABLE 4

Puncture Test

| Laminate composition | Nominal Radiation Dose (Mrad) | | | | | | |
|---|---|---|---|---|---|---|---|
| | 0 | 0.75 | 1.5 | 1.9 | 2.3 | 2.7 | 4 |
| 1/ 4/ 1 ( 4 = 2 mm) | F | F | F | F | F | P | F |
| 1/ 4/ 1 ( 4 = 1 mm) | F | - | - | - | F | - | - |
| 1/ 5/ 1 ( 5 = 2 mm) | F | F | F | F | P | P | P |
| 1/ 5/ 1 ( 5 = 1 mm) | - | F | - | - | - | P | - |
| 1/ 6/ 1 ( 6 = 2 mm) | F | F | F | P | F | P | P |
| 1/ 6/ 1 ( 6 = 1 mm) | - | - | F | - | - | - | P |
| 2/ 4/ 2 ( 4 = 2 mm) | F | F | P | P | P | P | P |
| 2/ 4/ 2 ( 4 = 1 mm) | - | - | - | F | - | - | P |
| 2/ 5/ 2 ( 5 = 2 mm) | F | P | F | P | P | P | P |
| 2/ 5/ 2 ( 5 = 1 mm) | - | - | F | - | - | P | - |
| 2/ 6/ 2 ( 6 = 2 mm) | F | F | P | P | P | P | P |
| 2/ 6/ 2 ( 6 = 1 mm) | - | F | - | - | F | - | - |
| 3/ 4/ 3 ( 4 = 2 mm) | F | F | F | P | F | P | F |
| 3/ 4/ 3 ( 4 = 1 mm) | - | - | P | - | - | P | - |
| 3/ 5/ 3 ( 5 = 2 mm) | F | P | P | F | F | F | P |
| 3/ 5/ 3 ( 5 = 1 mm) | - | - | - | F | P | - | - |
| 3/ 6/ 3 ( 6 = 2 mm) | F | P | P | F | P | P | P |
| 3/ 6/ 3 ( 6 = 1 mm) | - | F | - | - | - | - | P |

F = Fail
P = Pass
- = Not Tested

18

EXAMPLE 2

A tubeless pneumatic tire was buffed on the inside, at a localized area, to remove an area of the inner liner present in the tire. The tire was a tubeless GR70-15 tire and two such areas of the inner liner of approximately circular shape and about 6.25 cm diameter were prepared. On each such area was applied a 7.6 cm diameter circular laminate inner liner patch with adhesive cement. Both patches were made up of a 0.3 mm layer of Sample 2, a 2 mm layer of Sample 5 and a 0.3 mm layer of Sample 2 of Example 1. Patch A was a control and had not been irradiated, only vulcanized by heating at 150°C for 30 minutes. Patch B was irradiated using a 3 MV electron beam accelerator at a nominal dosage of 2.7 Mrad and vulcanized at 150°C for 30 minutes. The tire was installed on a rim and pressure tested at 2 kg/cm$^2$ to ensure that the applied patches were not leaking. A nail (3.3 mm diameter and 7.5 cm long) was hammered through the tread of the tire so as to penetrate patch A and the tire was run in the right rear position of a pick-up truck. After being run for 84 km, a slow-to-fast leak was clearly occurring and the pressure had dropped 15% (from 2 to 1.7 kg/cm$^2$). After standing for 12 hours, the tire had gone flat. The tire was repaired in the conventional manner with a plug in the hole formed by removal of the nail, checked and found to retain pressure (2 kg/cm$^2$). A nail was then hammered through the tread so as to penetrate patch B. The tire was run in the same position on the truck for 80 km with the nail still in, with no loss of pressure. The nail was removed, no pressure loss occurred and the tire was run for a further 93 km with no loss of pressure. A second nail was then hammered through the tread so as to penetrate patch B; no pressure loss occurred. The truck was run for 200 km with the nail still in, with no loss of pressure. The nail was removed, no pressure loss occurred and the tire showed no pressure loss after being run for a further 625 km. During the operation of the truck for this testing, daytime temperatures ranged from a low of 13°C to a high of 29°C and about one third of the distance was highway driving at 80 to 85 km/hr with the remainder being city driving at about 50 km/hr. The tire is still being used without signs of leakage.

A pneumatic tire may be built to contain the laminate inner liner of the present invention. A three-layer laminate inner liner compound may be formed in sheet form and irradiated as described in Example 1. This irradiated compound may then be used instead of the conventional inner liner compound for construction of a tire and the assembled tire then vulcanized in the known manner. Such a tire will have puncture-sealing characteristics.

CLAIMS

1. An inner liner for a tubeless pneumatic tire, which comprises a puncture-sealing laminate having a first outer layer and a second outer layer overlapping an inner layer, in which the first and second outer layers are joined together at the area of overlap, in which the first and second outer layers comprise halobutyl polymer and the inner layer comprises butyl polymer, and in which the laminate has been irradiated such that the inner layer has a Mooney (ML 1+4 at $100^{\circ}$C) of less than 12.

2. An inner liner according to claim 1, in which the first and second outer layers contain chlorobutyl polymer which contains from 97 to 99% by weight isobutylene and from 1 to 3% by weight isoprene, based on the hydrocarbon content of the polymer; and from 0.5 to 2.5% by weight chlorine, based on the chlorobutyl polymer.

3. An inner liner according to claim 1, in which the first and second outer layers contain bromobutyl polymer which contains from 97 to 99% by weight isobutylene and from 1 to 3% by weight isoprene, based on the hydrocarbon content of the polymer; and from 1 to 4% by weight bromine, based on the bromobutyl polymer.

4. An inner liner according to any preceding claim, in which the first and second layers contain, per 100 parts by weight halobutyl polymer, from 20 to 80 parts by weight of one or more types of carbon black or from 15 to 40 parts by weight of carbon black and from 30 to 90 parts by weight of calcium carbonate or soft clay, from 5 to 30 parts by weight of one or more hydrocarbon oils, from 2 to 15 parts by weight of one or more tackifiers and a vulcanisation system.

5. An inner liner according to any preceding claim, in which the butyl polymer of the inner layer contains from 97 to 99.5% by weight isobutylene and from 0.5 to 3% by weight isoprene.

6.      An inner liner according to any preceding claim, in which the inner layer contains, per 100 parts by weight of butyl polymer, from 50 to 120 parts by weight of one or more types of carbon black, from 30 to 100 parts by weight, as plasticiser, of one or more fluid polyisobutylenes or copolymers containing polyisobutylene, from 15 to 35 parts by weight of one or more hydrocarbon oils, from 2 to 10 parts by weight of one or more hydrocarbon tackifiers or hydrogenated wood rosin tackifier, and from 0.5 to 3 parts by weight of other processing aids.

7.      An inner liner according to any preceding claim, in which the first and second outer layers have a thickness of from 0.2 to 1 mm, and the inner layer has a thickness of from 0.7 to 4 mm.

8.      An inner liner according to any preceding claim, in which the laminate is irradiated with a nominal dosage of from 0.75 to 5 Mrad.

9.      A tubeless pneumatic tire having puncture-sealing characteristics, which comprises an annular road-engaging tread, two annular beads, two side-walls, each side-wall connecting a side of the tread to an annular bead, one or more reinforcing body plies extending from one bead to the other under the side-wall and tread portions, and an inner liner extending inside the or each reinforcing body ply from one bead toe to the other bead toe, characterised in that the inner liner is as defined in any preceding claim, and in which the second outer layer of the inner liner is the innermost of the laminate.

10.      A tire according to claim 9, in which the laminate is irradiated before assembly into the tire.

Fig.1

Fig.2

Fig.3

Fig.4